# EUROPEAN PATENT SPECIFICATION

(11) **EP 4 468 493 B1**
(45) Date of publication and mention of the grant of the patent: **23.09.2026**
(21) Application number: 22941932.0
(22) Date of filing: 16.05.2022
(51) Int. Cl.: H01M 50/342, H01M 50/30, H01M 50/15

(54) **END COVER, BATTERY CELL, BATTERY, AND ELECTRIC DEVICE**
ENDKAPPE, BATTERIEZELLE, BATTERIE UND ELEKTRISCHE VORRICHTUNG
COUVERCLE D'EXTRÉMITÉ, ÉLÉMENT DE BATTERIE, BATTERIE ET DISPOSITIF ÉLECTRIQUE

(43) Date of publication of application: 27.11.2024
(73) Proprietor: Contemporary Amperex Technology (Hong Kong) Limited, Hong Kong (HK)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/093130
(87) International publication number: WO 2023/220881

(56) References cited:
- EP-A1- 4 207 459
- WO-A1-2017/208620
- CN-A- 111 668 401
- CN-U- 212 277 341
- CN-U- 215 816 251
- CN-U- 216 120 624
- JP-A- 2021 136 194
- US-A1- 2012 114 988

## Description

### TECHNICAL FIELD

The present invention relates to the field of batteries, and in particular to an end cap, a battery cell, a battery, and an electrical device.

### BACKGROUND ART

Batteries have extensive applications in the field of new energy, such as electric vehicles and new energy vehicles. New energy vehicles and electric vehicles have become a new trend in the development of the automotive industry. The end cap of the battery is provided with a pressure relief structure configured for releasing the internal pressure of the battery when the internal pressure of the battery reaches the detonation pressure. However, in scenarios where the core is inverted, the pressure relief structure often opens prematurely, resulting in the inability to achieve normal pressure relief function.

The document EP 4 207 459 A1 describes a pressure relief mechanism for a battery. The pressure relief mechanism is disposed on the housing plate of the battery cell, and includes: a connecting portion, located in a peripheral region of the pressure relief mechanism, and configured to connect to the housing plate; a first part, where one end of the first part is connected to the connecting portion, and the other end of the first part extends out obliquely toward an interior of the battery cell; a fragile portion, connected to the extending end of the first part; and a second part, taking a shape that protrudes toward the interior of the battery cell, where an outer edge region of the second part is connected to the fragile portion. When an internal temperature or gas pressure of the battery cell is less than a first preset value, the fragile portion is squeezed and pressed by the first part and/or the second part.

The document WO 2017/208620 A1 discloses a sealing body composed of a metal plate for closing the opening of a device. The sealing body includes a gas release valve, which is integrally formed with the metal plate and opens when the internal pressure of the device rises to a predetermined level.

### SUMMARY

It is an object of the embodiments of the present invention to provide an end cap, a battery cell, a battery, and an electrical device, which is intended to solve the problem that the pressure relief structure in the related technology often opens prematurely, resulting in the inability to achieve normal pressure relief function. Aspects of the invention are set out in the appended claims.

In a first aspect, the present invention provides an end cap, wherein the end cap comprises a cap body and a pressure relief groove; the pressure relief groove is provided in the cap body; the pressure relief groove comprises a long groove section and a short groove section located in different orientations; the long groove section is connected to the short groove section; the long groove section is provided with a thickening zone; and a thickness of the cap body in the thickening zone is greater than a thickness of the cap body in the short groove section.

In the above technical solution, when an inner side of the end cap is subjected to pressure from the inside of the battery cell, the short groove section is a stress concentration region. When an outside of the end cap is subjected to an impact force, the long groove section is the stress concentration region. Therefore, the long groove section is more susceptible to breakage from external impacts than the short groove section. The end cap, by providing a thickening zone on the long groove section, makes the thickness of the cap body at the thickening zone greater than the thickness of the cap body at the short groove section, thus enhancing the strength of the long groove section and improving the impact resistance of the end cap. To a certain extent, the long groove section is prevented from being damaged due to external impacts, and the pressure relief groove is prevented from opening when the internal pressure of the battery cell does not reach the detonation pressure, thereby ensuring the normal operation of the battery cell.

As an optional technical solution in the embodiments of the present invention, along an extension direction of the long groove section, a ratio of the length of the thickening zone to the length of the long groove section is 0.01-0.5.

In the above technical solution, if the ratio of the length of the thickening zone to the length of the long groove section is less than 0.01, the length of the thickening zone is small, where the strengthening effect on the long groove section is too weak. Thus, the enhancement of the impact resistance of the end cap is not obvious. If the ratio of the length of the thickening zone to the length of the long groove section is more than 0.5, the length of the thickening zone is larger, where the strengthening effect on the long groove section is too strong. Thus, the long groove section is not easy to open when the internal pressure of the battery cell reaches the detonation pressure, which weakens the speed of pressure relief.

According to the present invention, a thickness of the cap body is not less than 1 mm in the thickening zone.

In the above technical solution, if the thickness of the cap body in the thickening zone is less than 1 mm, the strengthening effect on the long groove section is too weak. Thus, the enhancement of the impact resistance of the end cap is not obvious.

As an optional technical solution in the embodiments of the present invention, the long groove section is provided with multiple thickening zones, wherein the multiple thickening zones are arranged at intervals along the extension direction of the long groove section.

In the above technical solution, by providing multiple thickening zones in the extension direction of the long groove section, the strengthening effect on the long groove section is enhanced, which is conducive to enhancing the impact resistance of the end cap.

As an optional technical solution in the embodiments of the present invention, the thickening zone is located in a middle position of the long groove section.

In the above technical solution, the thickening zone is arranged in the middle position of the long groove section, which has a better strengthening effect on the long groove section.

As an optional technical solution in the embodiments of the present invention, the long groove section is a straight-line groove extending along a straight-line trajectory.

In the above technical solution, the short groove section is the first opening position of the pressure relief groove. The long groove section is arranged as a straight-line groove extending along a straight-line trajectory, so that after the short groove section is cracked, it can be opened more easily along the long groove section. This improves the opening rate of the pressure relief groove and realizes rapid pressure relief.

As an optional technical solution in the embodiments of the present invention, the pressure relief groove comprises two long groove sections, wherein the two long groove sections are arranged opposite to each other along a first direction and the short groove section is connected to the two long groove sections.

In the above technical solution, by arranging two long groove sections, when the internal pressure of the battery cell reaches the detonation pressure, the short groove section opens first, and then further opens along the two long groove sections, thus improving the opening rate of the pressure relief groove, increasing the opening range of the pressure relief groove, and realizing rapid pressure relief.

As an optional technical solution in the embodiments of the present invention, the thickening zone located on one long groove section and the thickening zone located on the other long groove section are arranged in a manner of axial symmetry.

In the above technical solution, by arranging the thickening zone of one long groove section and the thickening zone of another long groove section in a manner of axial symmetry, the two long groove sections are more uniformly subjected to force when the end cap is subjected to an external impact, which is conducive to enhancing the impact resistance of the end cap.

As an optional technical solution in the embodiments of the present invention, the long groove section comprises a first end and a second end, wherein the first end of each long groove section is connected to the short groove section. A connection line connecting the first end of one long groove section to the second end of the other long groove section is a first connection line, and a connection line connecting the second end of one long groove section to the first end of the other long groove section is a second connection line. An intersection point of the first connection line and the second connection line is a center point. The thickening zone located on one long groove section and the thickening zone located on the other long groove section are arranged in a manner of central symmetry about the center point.

In the above technical solution, by arranging the thickening zone on one long groove section and the thickening zone on the other long groove section in a manner of central symmetry about the center point, the strengthening position of the thickening zone on the long groove section is optimized, and thus, the end cap has better force distribution on the long groove sections when subjected to external impacts, thereby to a certain extent preventing the long groove sections from being damaged due to external impacts.

As an optional technical solution in the embodiments of the present invention, the pressure relief groove includes two short groove sections. The two short groove sections are arranged oppositely along a second direction. Each short groove section connects two long groove sections. The first direction, the second direction, and the thickness direction of the cap body are perpendicular to each other.

In the above technical solution, by arranging two short groove sections, the short groove sections are the first positions to open in the pressure relief groove. When the internal pressure of the battery cell reaches the detonation pressure, the two short groove sections crack first, then open simultaneously along the long groove sections from the positions of the two short groove sections towards the middle of the long groove sections. That is, one end of the long groove section opens towards the middle, and at the same time, the other end of the long groove section also opens towards the middle. This improves the opening rate of the pressure relief groove and achieves rapid pressure relief.

As an optional technical solution in the embodiments of the present invention, the long groove section is a straight-line groove extending along a straight-line trajectory, and the short groove section is an arc-shaped groove extending along an arc trajectory.

In the above technical solution, by arranging the short groove section as an arc-shaped groove extending along an arc trajectory, a weak position is formed at the middle position of the short groove section on the cap body. The weak position is the first opening position of the pressure relief groove, which enables the pressure relief groove to open promptly when the internal pressure of the battery cell reaches the detonation pressure. The long groove section is a straight-line groove extending along a straight-line trajectory. After the cap body cracks along the short groove section, it can more easily open along the long groove section, thus improving the opening rate of the pressure relief groove and achieving rapid pressure relief.

As an optional technical solution in the embodiments of the present invention, the extension direction of the long groove section is consistent with a width direction of the cap body.

In the above technical solution, by aligning the extension direction of the long groove section with the width direction of the cap body, when the inner side of the end cap is subjected to the internal pressure of the battery cell, the stress at the position of the short groove section on the end cap is more concentrated. When the outer side of the end cap is subjected to impact force, the stress at the position of the long groove section on the end cap is more concentrated, which enables a greater difference in stress concentration regions of the end cap under the two different working conditions. This enhances the impact resistance of the battery cell and improves the service life of the battery cell.

In a second aspect, the present invention also provide a battery cell, wherein the battery cell includes an electrode assembly, a shell, and the above-mentioned end cap. The shell is provided with a holding space with an opening at one end, and the holding space is configured to house the electrode assembly. The end cap is connected to the shell and seals the opening.

In a third aspect, the present invention further provide a battery, wherein the battery includes a box and the above-mentioned battery cell. The battery cell is housed within the box.

As an optional technical solution in the embodiments of the present invention, the end cap is provided on a side of the battery cell close to a bottom wall of the box.

In the above technical solution, providing the end cap on a side of the battery cell close to a bottom wall of the box means that the battery cell is arranged upside down inside the box.

In a fourth aspect, the present invention further provide an electric device, wherein the electric device includes the battery as described above. The battery is configured to provide electrical energy.

### BRIEF DESCRIPTION OF DRAWINGS

To more clearly illustrate the technical solutions of the embodiments of the present invention, the following will briefly introduce the drawings used in the embodiments.
FIG. 1 is a schematic diagram of a structure of a vehicle provided in some embodiments of the present invention;
FIG. 2 is an exploded view of a battery provided in some embodiments of the present invention;
FIG. 3 is a schematic diagram of a structure of a battery cell provided in some embodiments of the present invention;
FIG. 4 is a structural schematic diagram of an end cap provided in some embodiments of the present invention;
FIG. 5 is a top view of the end cap provided in some embodiments of the present invention;
FIG. 6 is an enlarged view at location A in FIG. 5;
FIG. 7 is a top view of the end cap provided in some other embodiments of the present invention;
FIG. 8 is an enlarged view at location B in FIG. 7;
FIG. 9 is a top view of the end cap provided in some other embodiments of the present invention; and
FIG. 10 is an enlarged view at location C in FIG. 9.

Reference numerals: 10- box; 11- first portion; 12- second portion; 20- battery cell; 21-end cap; 211- cap body; 212- pressure relief groove; 2121- long groove section; 2122- short groove section; 2123- thickening zone; 2124- first connection line; 2125- second connection line; 2126- center point; 22- electrode assembly; 23- shell; 100- battery; 200- controller; 300- motor; 1000- vehicle.

### DETAILED DESCRIPTION OF EMBODIMENTS

In order to make the objective, technical solution, and advantages of the embodiments of the present invention clearer, the following will provide a clear and complete description of the technical solution in the embodiments of the present invention, in conjunction with the drawings in the embodiments of the present invention. Obviously, the described embodiments are only a part of the embodiments of the present invention, rather than all embodiments.

Unless otherwise defined, all technical and scientific terms used herein have the same meaning as understood by those skilled in the art of the relevant technical field. The terms used in the summary of the present invention are used for the purpose of describing specific embodiments and are not intended to limit the present invention. The terms "comprise" and "provide" and their variations, as well as any other variations, are intended to cover non-exclusive inclusion in the summary and the claims of the present invention, as well as in the drawings. The terms "first", "second", etc., used in the summary and claims of the present invention, or in the above drawings, are used to distinguish between different objects and are not intended to describe a specific sequence or hierarchy.

The term "embodiment" used in the present invention means that specific features, structures, or characteristics described in conjunction with the embodiment can be included in at least one embodiment of the present invention. The use of this phrase in various parts of the summary does not necessarily refer to the same embodiment, nor does it imply that these embodiments are mutually exclusive or independent of each other.

In the description of the present invention, it should be noted that, unless otherwise clearly stipulated and limited, the terms "provide", "link", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present invention according to specific situations.

In the present invention, the term "and/or" is used as a way to describe the relationship between associated objects, indicating that there can be three possible relationships. For example, "A and/or B" can represent: the presence of A, the presence of both A and B, or the presence of B. Additionally, the character "/" in the present invention generally represents an "or" relationship between the preceding and following associated objects.

In the embodiments of the present invention, identical reference numerals indicate the same components. For the sake of conciseness, detailed explanations of the same components are omitted in different embodiments. It should be understood that the dimensions such as thickness, length, and width of various components in the embodiments of the present invention as shown in the drawings, as well as the overall dimensions such as thickness, length, and width of the integrated device, are provided as illustrative examples and should not be construed to limit the scope of the present invention.

In the present invention, the term "multiple" refers to two or more (including two).

In the present invention, the battery cell can comprise lithium-ion secondary battery cells, lithium-ion primary battery cells, lithium-sulfur battery cells, sodium-lithium ion battery cells, sodium-ion battery cells, and magnesium-ion battery cells. The embodiments of the present invention are not limited herein. The battery cell can have various shapes such as cylindrical, flat, rectangular, or other shapes. The embodiments of the present invention are not limited in respect thereof either. Battery cells are generally categorized into three types according to the encapsulation method: cylindrical battery cells, prismatic battery cells, and pouch battery cells. The embodiments of the present invention are not limited in respect thereof either.

The batteries mentioned in the embodiments of the present invention refer to a single physical module that comprises one or multiple battery cells to provide higher voltage and capacity. For example, the batteries mentioned in the present invention can comprise battery modules or battery packs, and so on. Batteries typically comprise a box that is configured to encapsulate one or multiple battery cells. The box helps to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive current collector and a positive active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative tab. The material of the negative electrode current collector can be copper, and the negative active material can be carbon or silicon, and so on. To ensure that fusing does not occur when a large current passes through, multiple positive tabs are provided and stacked together, and multiple negative tabs are provided and stacked together. The material of the separator can be PP (polypropylene), PE (polyethylene), and so on. Furthermore, the electrode assembly can be of a wound structure or a stacked structure. The embodiments of the present invention are not limited herein.

The development of battery technology needs to consider multiple design factors simultaneously, such as energy density, cycle life, discharge capacity, charge-discharge rate, and other performance parameters. Additionally, the safety of the battery also needs to be taken into consideration.

For a battery cell, to ensure the safety of the battery cell, a pressure relief structure can be provided on the end cap of the battery cell. For example, a pressure relief groove can be provided on the end cap. When the internal pressure of the battery cell reaches the detonation pressure, the pressure relief groove opens to release the internal pressure of the battery cell, thereby reducing the risk of explosion and fire in the battery cell.

The inventors note that, in scenarios where the core is inverted, the pressure relief structure often opens prematurely, resulting in the inability to achieve normal pressure relief function.

The inventors further discovered that, in scenarios where the core is inverted, the end cap is more susceptible to external impacts. External impact forces are easily transmitted to the location of the pressure relief structure, which can cause the pressure relief structure to open prematurely, thus resulting in the inability to achieve normal pressure relief function.

In view of this, the embodiments of the present invention provide an end cap, wherein the end cap comprises a cap body and a pressure relief groove, and the pressure relief groove is provided in the cap body. The pressure relief groove comprises a long groove section and a short groove section located in different orientations, wherein the long groove section is connected to the short groove section. The long groove section is provided with a thickening zone, and a thickness of the cap body in the thickening zone is greater than a thickness of the cap body in the short groove section.

When an inner side of the end cap is subjected to pressure from the inside of the battery cell, the short groove section is a stress concentration region. When an outside of the end cap is subjected to an impact force, the long groove section is the stress concentration region. Therefore, the long groove section is more susceptible to breakage from external impacts than the short groove section. The end cap, by providing a thickening zone on the long groove section, makes the thickness of the cap body at the thickening zone greater than the thickness of the cap body at the short groove section, thus enhancing the strength of the long groove section and improving the impact resistance of the end cap. To a certain extent, the long groove section is prevented from being damaged due to external impacts, and the pressure relief groove is prevented from opening when the internal pressure of the battery cell does not reach the detonation pressure, thereby ensuring the normal operation of the battery cell.

The technical solutions described in the embodiments of the present invention are applicable to batteries and electrical devices that utilize these batteries.

The electrical devices can include vehicles, mobile phones, portable devices, laptops, ships, spacecraft, electric toys, electric tools, and more. Aerospace vehicles include airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators, and electric planers. The embodiments of the present invention do not impose any specific restrictions on the aforementioned electrical devices.

The following embodiments are explained using the example of vehicles 1000 as the electrical devices for the sake of convenience.

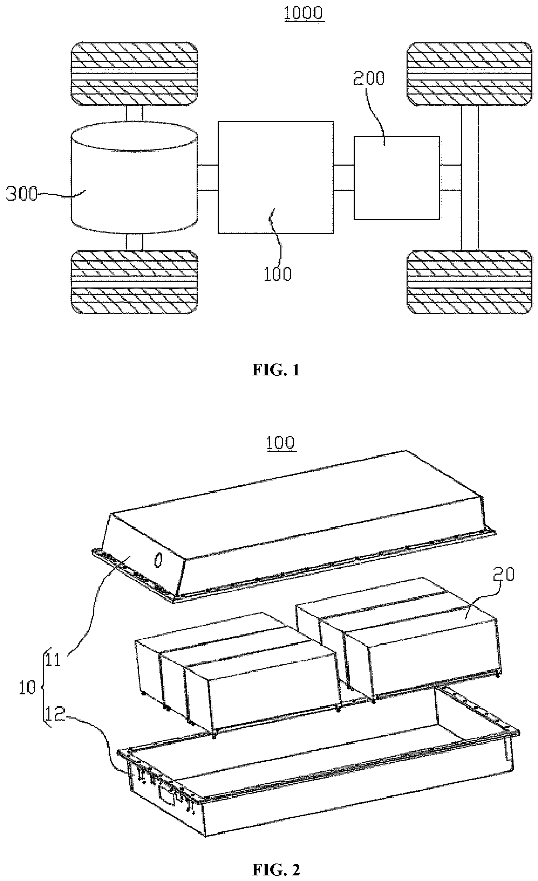

Referring to FIG. 1, FIG. 1 is a schematic diagram of a structure of a vehicle 1000 provided in some embodiments of the present invention. The vehicle 1000 can be a gasoline-powered car, a natural gas car, or a new energy vehicle. The new energy vehicles can be pure electric cars, hybrid cars, or extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving of the vehicle 1000.

In some embodiments of the present invention, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of a battery 100 provided in some embodiments of the present invention. The battery 100 comprises a box 10 and a battery cell 20, wherein the box 20 is housed the battery cell 10. The box 10 is configured to provide a holding space for the battery cell 20, and the box 10 can be of various structures. In some embodiments, the box 10 can comprise a first portion 11 and a second portion 12, wherein the first portion 11 and the second portion 12 are fitted together. The first portion 11 and the second portion 12 together define the holding space configured to house the battery cell 20. The second portion 12 can be a hollow structure opened at one end, and the first portion 11 can be a plate-like structure. The first portion 11 is capped over an opening side of the second portion 12 so that the first portion 11 and the second portion 12 together define a holding space. Additionally, both the first portion 11 and the second portion 12 can be hollow structures opened at one end, and an opening side of the first portion 11 is capped over an opening side of the second portion 12. Of course, the box 10 formed by the first portion 11 and the second portion 12 can be of a variety of shapes, e.g., cylindrical, rectangular, etc.

In the battery 100, multiple battery cells 20 can be provided. The multiple battery cells 20 can be connected in series, parallel, or hybrid. Hybrid connection refers to having both series and parallel connections among multiple battery cells 20. The multiple battery cells 20 can be directly connected in series, parallel, or hybrid. Then, the whole comprising the multiple battery cells 20 is housed in the box 10. Of course, the battery 100 can also be in the form that, the multiple battery cells 20 can be first connected in series, parallel, or hybrid to form battery modules, and then the multiple battery modules can be connected in series, parallel, or hybrid to be formed into a whole, which is accommodated within the box 10. The battery 100 can also comprise other structures. For example, the battery 100 can also comprise a busbar component, which is configured for achieving electrical connection between the multiple battery cells 20.

Each battery cell 20 can be a secondary battery cell or a primary battery cell. It can also be a lithium-sulfur battery cell, sodium-ion battery cell, magnesium-ion battery cell, or other types, which are not limited to these. The battery cell 20 can have various shapes such as cylindrical, flat, rectangular, or other shapes.

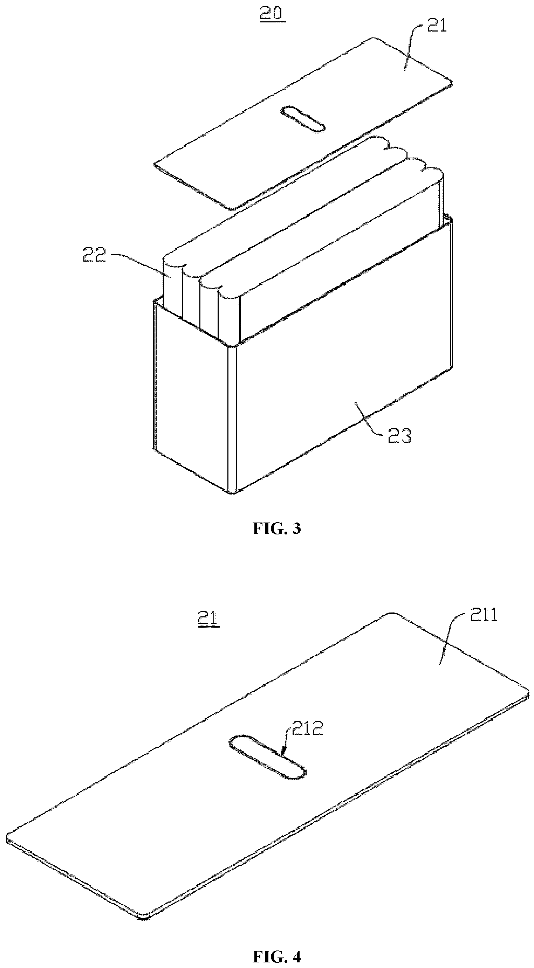

Referring to FIG. 3, FIG. 3 is a schematic diagram of a disassembled structure of a battery cell 20 provided in some embodiments of the present invention. The battery cell 20 refers to the smallest unit comprising the battery 100. As shown in FIG. 3, the battery cell 20 includes an end cap 21, an electrode assembly 22, a shell 23, and other functional components.

The end cap 21 refers to the component that covers the opening of the shell 23 to isolate the internal environment of the battery cell 20 from the external environment. Without limitation, the shape of the end cap 21 can be adapted to fit the shape of the shell 23 to cooperate with the shell 23. Optionally, the end cap 21 can be made of a material with a certain hardness and strength, such as aluminum alloy. In this way, the end cap 21 is less likely to deform under compression or impact, allowing the battery cell 20 to have higher structural strength, such that safety performance can be improved. Functional components such as the electrode terminal, which is not shown in the figure, can be arranged on the end cap 21. The electrode terminal can be configured to electrically connect the electrode assembly 22, which is configured for outputting or inputting the electrical energy of the battery cell 20. The material of the end cap 21 can vary, such as copper, iron, aluminum, stainless steel, aluminum alloy, and plastic. The embodiments of the present invention do not impose specific restrictions on this. In some embodiments, an insulating component can be arranged on the inner side of the end cap 21. The insulating component can be configured to isolate the electrical connection components inside the shell 23 from the end cap 21, thus reducing the risk of short circuits. Exemplarily, the material of the insulating component can be plastics, rubber, and others.

The shell 23 is a component configured to cooperate with the end cap 21 to form the internal environment of the battery cell 20. The formed internal environment can be configured to house the electrode assembly 22, electrolyte, and other components. The shell 23 and the end cap 21 can be independent components, and an opening can be provided on the shell 23. The end cap 21 can be closed over the opening, thus forming the internal environment of the battery cell 20 at the opening. Without limitation, the end cap 21 and the shell 23 can also be integrated. Specifically, the end cap 21 and the shell 23 can first form a common connecting surface before other components are arranged into the shell. When it is necessary to encapsulate the interior of the shell 23, the end cap 21 is then closed over the shell 23. The shell 23 can be in various shapes and sizes, for example, rectangular shapes, cylindrical shapes, and hexagonal prisms. Specifically, the shape of the shell 23 can be determined based on the specific shape and size of the electrode assembly 22. The material of the shell 23 can vary, such as copper, iron, aluminum, stainless steel, aluminum alloy, and plastic. The embodiments of the present invention do not impose specific restrictions on this.

The electrode assembly 22 is the component within the battery cell 20 where electrochemical reactions occur. The shell 23 can contain one or more electrode assemblies 22. The electrode assembly 22 is primarily formed by winding or stacking the positive electrode sheet and negative electrode sheet, and typically, a separator is arranged between the positive electrode sheet and negative electrode sheet. The portions of the positive electrode sheet and negative electrode sheet that comprise the active material form the main body portion of the electrode assembly 22, and the portions of the positive electrode sheet and negative electrode sheet that do not comprise the active material each form the tab. The positive electrode tab and the negative electrode tab can be located at one end of the main body portion or separately at the two ends of the main body portion. During the charging and discharging process of the battery 100, the positive electrode active material and the negative electrode active material undergo reactions with the electrolyte. The tab is connected to the electrode terminal to form a current loop.

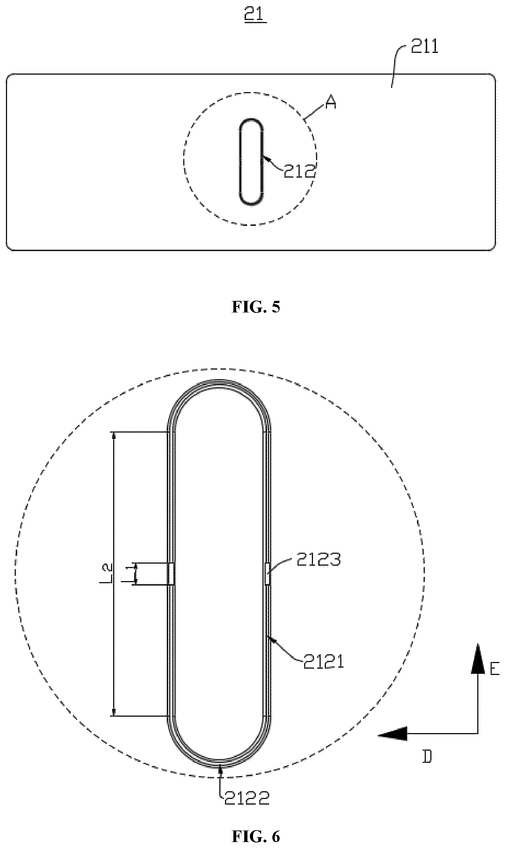

Referring to FIGS. 4, 5, and 6, FIG. 4 is a structural schematic diagram of an end cap 21 provided in some embodiments of the present invention; FIG. 5 is a top view schematic diagram of the end cap 21 provided in some embodiments of the present invention; and FIG. 6 is an enlarged view at location A in FIG. 5. The embodiments of the present invention provide an end cap 21, wherein the end cap 21 comprises a cap body 211 and a pressure relief groove 212 and the pressure relief groove 212 is provided in the cap body 211. The pressure relief groove 212 comprises a long groove section 2121 and a short groove section 2122 located in different orientations, wherein the long groove section 2121 is connected to the short groove section 2122. The long groove section 2121 is provided with a thickening zone 2123, and a thickness of the cap body 211 in the thickening zone 2123 is greater than a thickness of the cap body 211 in the short groove section 2122.

The cap body 211 is the main structure of the end cap 21 and is mainly configured to close the opening of the shell 23. The shape of the cap body 211 is adapted to the shape of the opening of the shell 23. For example, when the opening of the shell 23 is rectangular in shape, the cap body 211 is also rectangular in shape. When the opening of the shell 23 is circular in shape, the cap body 211 is also circular in shape.

The pressure relief groove 212 can be a groove recessed from a surface of the cap body 211 in the thickness direction of the cap body 211. The pressure relief groove 212 can be formed in various ways, such as stamping and milling. The pressure relief groove 212 can be arranged on the surface of the cap body 211 facing the inside of the shell 23 or on the surface of the cap body 211 away from the shell 23. Taking the cap body 211 being a rectangular flat plate structure as an example, the cap body 211 is provided with an inner surface and an outer surface that are opposite to each other in the thickness direction. The inner surface of the cap body 211 faces the inside of the shell 23, and the outer surface of the cap body 211 is arranged away from the shell 23. The pressure relief groove 212 can be arranged on the inner surface of the cap body 211 or on the outer surface of the cap body 211.

The long groove section 2121 is a portion of the pressure relief groove 212 that extends in a certain direction and is longer in length. The short groove section 2122 is a portion of the pressure relief groove 212 that extends in another direction and is shorter in length. The long groove section 2121 and the short groove section 2122 extend in different directions and are therefore located in different orientations.

The thickening zone 2123 is a region on the long groove section 2121 where the groove depth is shallower, meaning that the thickness of the cap body 211 at the thickening zone 2123 is greater than the thickness of the cap body 211 in other regions of the long groove section 2121. Due to the potentially different groove depths of the long groove section 2121 and the short groove section 2122, to enhance the strength of the long groove section 2121, the thickness of the cap body 211 at the thickening zone 2123 is enabled to be greater than the thickness of the cap body 211 at the short groove section 2122. This helps to improve the impact resistance of the end cap 21.

When an inner side of the end cap 21 is subjected to pressure from the inside of the battery cell 20, the short groove section 2122 is a stress concentration region. When an outside of the end cap 21 is subjected to an impact force, the long groove section 2121 is the stress concentration region. Therefore, the long groove section 2121 is more susceptible to breakage from external impacts than the short groove section 2122. The end cap 21, by providing a thickening zone 2123 on the long groove section 2121, makes the thickness of the cap body 211 at the thickening zone 2123 greater than the thickness of the cap body 211 at the short groove section 2122, thus enhancing the strength of the long groove section 2121 and improving the impact resistance of the end cap 21. To a certain extent, the long groove section 2121 is prevented from being damaged due to external impacts, and the pressure relief groove 212 is prevented from opening when the internal pressure of the battery cell 20 does not reach the detonation pressure, thereby ensuring the normal operation of the battery cell 20.

Referring to FIG. 6, in some embodiments, along an extension direction of the long groove section 2121, a ratio of the length of the thickening zone 2123 to the length of the long groove section 2121 is 0.01-0.5.

The long groove section 2121 can be a straight-line groove extending along a straight-line trajectory, or it can also be a curved groove extending along a curved trajectory. For example, the long groove section 2121 can be a wavy groove extending along a wavy line trajectory, or the long groove section 2121 can be an arc-shaped groove extending along an arc trajectory.

In the extension direction of the long groove section 2121, the length of the thickening zone 2123 is at least 0.01 times the length of the long groove section 2121. The length of the thickening zone 2123 is at most 0.5 times the length of the long groove section 2121. For instance, when the long groove section 2121 is a straight-line groove extending along a straight-line segment trajectory, the length of the thickening zone 2123 is 0.01 to 0.5 times the length of the straight-line segment. When the long groove section 2121 is an arc-shaped groove extending along an arc trajectory, the length of the thickening zone 2123 is 0.01 to 0.5 times the arc length of the arc.

The ratio of the length of the thickening zone 2123 to the length of the long groove section 2121 can be 0.1, 0.2, 0.3, 0.4, etc. Using the above ratio ensures that all the thickening zones 2123 can effectively enhance the strength of the long groove section 2121.

If the ratio of the length of the thickening zone 2123 to the length of the long groove section 2121 is less than 0.01, the length of the thickening zone 2123 is small, where the strengthening effect on the long groove section 2121 is too weak. Thus, the enhancement of the impact resistance of the end cap 21 is not obvious. If the ratio of the length of the thickening zone 2123 to the length of the long groove section 2121 is more than 0.5, the length of the thickening zone 2123 is larger, where the strengthening effect on the long groove section 2121 is too strong. Thus, the long groove section 2121 is not easy to open when the internal pressure of the battery cell 20 reaches the detonation pressure, which weakens the speed of pressure relief.

Referring to FIG. 6, taking the long groove section 2121 as a straight-line groove extending along a straight-line trajectory as an example, in the extension direction of the long groove section 2121, the length of the thickening zone 2123 is L₁ shown in the figure, and the length of the long groove section 2121 is L₂ shown in the figure, satisfying the condition: 0.01 ≤ L₁/ L₂≤0.5.

According to the present invention, a thickness of the cap body 211 is not less than 1 mm in the thickening zone 2123.

"A thickness of the cap body 211 is not less than 1 mm in the thickening zone 2123" means that the thickness of the cap body 211 at the thickening zone 2123 is 1 mm or greater than 1 mm. For example, the cap body 211 can have a thickness of 1 mm, 1.1 mm, and 1.2 mm, in the thickening zone 2123.

If the thickness of the cap body 211 in the thickening zone 2123 is less than 1 mm, the strengthening effect on the long groove section 2121 is too weak. Thus, the enhancement of the impact resistance of the end cap 21 is not obvious.

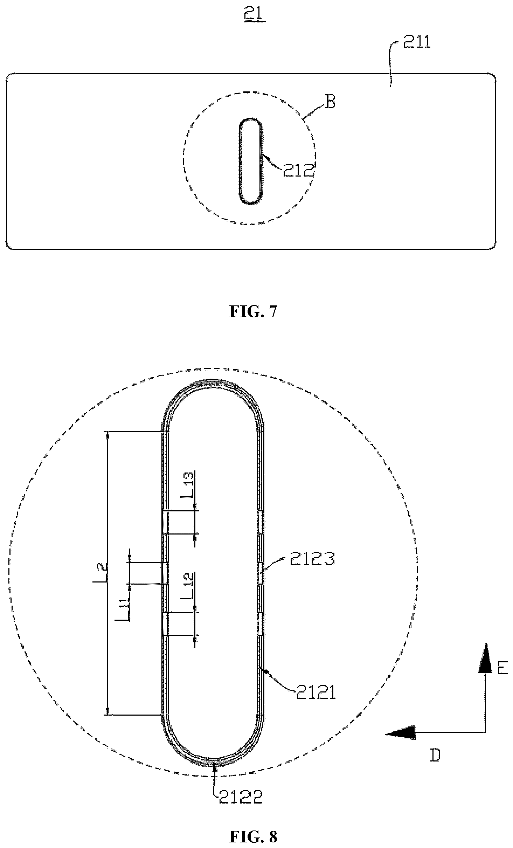

Referring to FIG. 7, in conjunction with reference to FIG. 8, FIG. 7 is a top view schematic diagram of the end cap 21 provided in some other embodiments of the present invention; and FIG. 8 is an enlarged view at location B in FIG. 7. In some other embodiments, the long groove section 2121 is provided with multiple thickening zones 2123. The multiple J116162EPPCT thickening zones 2123 are arranged at intervals along the extension direction of the long groove section 2121.

Taking the example of the long groove section 2121 as a straight-line groove extending along a straight-line trajectory, the multiple thickening zones 2123 are arranged at intervals along the straight-line trajectory. Taking the example of the long groove section 2121 as an arc-shaped groove extending along an arc trajectory, the multiple thickening zones 2123 are arranged at intervals along the arc trajectory.

"Arranged at intervals" means that there is a spacing between two adjacent thickening zones 2123.

By providing multiple thickening zones 2123 in the extension direction of the long groove section 2121, the strengthening effect on the long groove section 2121 is enhanced, which is conducive to enhancing the impact resistance of the end cap 21.

It should be noted that when multiple thickening zones 2123 are provided on the long groove section 2121, the ratio of the total length of the multiple thickening zones 2123 to the length of the long groove section 2121 in the extension direction of the long groove section 2121 is 0.01-0.5. Referring to FIG. 8, three thickening zones 2123 are provided on the long groove section 2121. Along the extension direction of the long groove section 2121, the total length of the multiple thickening zones 2123 is L₁ = L₁₁ + L₁₂ + L₁₃, and the length of the long groove section 2121 is L₂ shown in the figure, satisfying the condition 0.01 ≤L₁/L₂≤0.5, i.e., 0.01 ≤(L₁₁ + L₁₂ + L₁₃)/ L₂≤0.5.

In some embodiments, the thickening zone 2123 is located in the middle position of the long groove section 2121.

Here, "the thickening zone 2123 is located in the middle position of the long groove section 2121" means that the thickening zone 2123 is closer to the middle position compared to the end portions of the long groove section 2121. The position of the thickening zone 2123 is allowed to deviate from the exact center of the long groove section 2121, and it is not necessarily required that the thickening zone 2123 is located directly in the exact center of the long groove section 2121.

The thickening zone 2123 is arranged in the middle position of the long groove section 2121, which has a better strengthening effect on the long groove section 2121.

Referring to FIG. 8, in some embodiments, the long groove section 2121 is a straight-line groove extending along a straight-line trajectory. The short groove section 2122 is the first opening position of the pressure relief groove 212. The long groove section 2121 is arranged as a straight-line groove extending along a straight-line trajectory, so that after the short groove section 2122 is cracked, it can be opened more easily along the long groove section 2121. This improves the opening rate of the pressure relief groove 212 and realizes rapid pressure relief.

Referring to FIG. 8, in some embodiments, the pressure relief groove 212 comprises two long groove sections 2121, wherein the two long groove sections 2121 are arranged opposite to each other along a first direction. The short groove section 2122 connects two long groove sections 2121.

The first direction can be the D direction as shown in FIG. 8.

When the long groove section 2121 is a straight-line groove extending along a straight-line trajectory, two long groove sections 2121 are parallel to each other. The two long groove sections 2121 are spaced apart along the first direction. The short groove section 2122 connects the two long groove sections 2121 by having one end of the short groove section 2122 connected to one end of one long groove section 2121, and the other end of the short groove section 2122 connected to one end of the other long groove section 2121.

By arranging two long groove sections 2121, when the internal pressure of the battery cell 20 reaches the detonation pressure, the short groove section 2122 opens first, and then further opens along the two long groove sections 2121, thus improving the opening rate of the pressure relief groove 212, increasing the opening range of the pressure relief groove 212, and realizing rapid pressure relief.

In some embodiments, the thickening zone 2123 located on one long groove section 2121 and the thickening zone 2123 located on the other long groove section 2121 are arranged in a manner of axial symmetry.

By arranging the thickening zone 2123 of one long groove section 2121 and the thickening zone 2123 of another long groove section 2121 in a manner of axial symmetry, the two long groove sections 2121 are more uniformly subjected to force when the end cap 21 is subjected to an external impact, which is conducive to enhancing the impact resistance of the end cap 21.

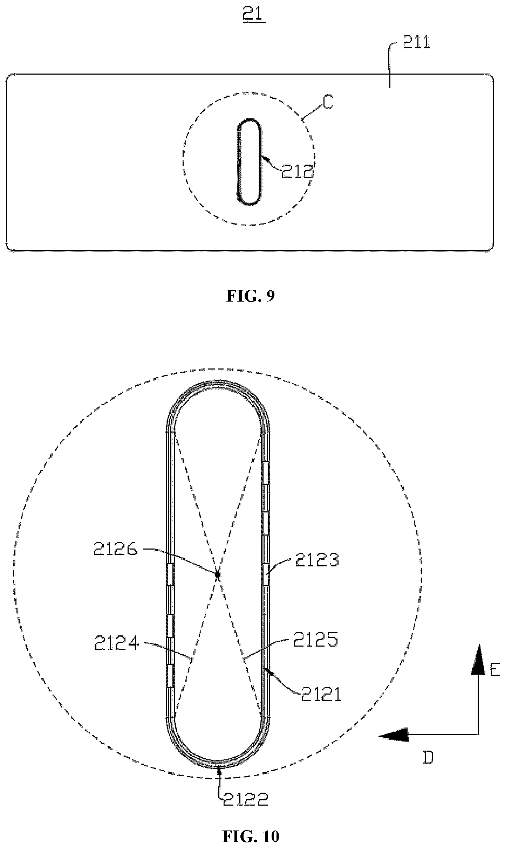

Referring to FIG. 9, in conjunction with reference to FIG. 10, FIG. 9 is a top view schematic diagram of the end cap 21 provided in some other embodiments of the present invention; and FIG. 10 is an enlarged view at location C in FIG. 9. In yet further embodiments, the long groove section 2121 comprises a first end and a second end, wherein the first end of each long groove section 2121 is connected to the short groove section 2122. A connection line connecting the first end of one long groove section 2121 to the second end of the other long groove section 2121 is a first connection line 2124, and a connection line connecting the second end of one long groove section 2121 to the first end of the other long groove section 2121 is a second connection line 2125. An intersection point of the first connection line 2124 and the second connection line 2125 is a center point 2126. The thickening zone 2123 located on one long groove section 2121 and the thickening zone 2123 located on the other long groove section 2121 are arranged in a manner of central symmetry about the center point 2126.

Each long groove section 2121 includes a first end and a second end, wherein the first end of one long groove section 2121 is close to the first end of the other long groove section 2121, and the second end of one long groove section 2121 is close to the second end of the other long groove section 2121. The two long groove sections 2121 can be considered as the two opposite long sides of a rectangle, so that the first connection line 2124 and the second connection line 2125 are the diagonals of the rectangle. The center point 2126 is the intersection point of the two diagonals.

By arranging the thickening zone 2123 on one long groove section 2121 and the thickening zone 2123 on the other long groove section 2121 in a manner of central symmetry about the center point 2126, the strengthening position of the thickening zone 2123 on the long groove section 2121 is optimized, and thus, the end cap 21 has better force distribution on the long groove sections 2121 when subjected to external impacts, thereby to a certain extent preventing the long groove sections 2121 from being damaged due to external impacts.

In some embodiments, the pressure relief groove 212 comprises two short groove sections 2122, wherein the two short groove sections 2122 are arranged opposite to each other along a second direction. Each short groove section 2122 connects two long groove sections 2121. The first direction, the second direction, and the thickness direction of the cap body 211 are perpendicular to each other.

The second direction can be the E direction as shown in FIG. 10. A short groove section 2122 connects a first end of a long groove section 2121 to a first end of another long groove section 2121. Another short groove section 2122 connects a second end of a long groove section 2121 to a second end of another long groove section 2121.

By arranging two short groove sections 2122, the short groove sections 2122 are the first positions to open in the pressure relief groove 212. When the internal pressure of the battery cell 20 reaches the detonation pressure, the two short groove sections 2122 crack first, then open simultaneously along the long groove sections 2121 from the positions of the two short groove sections 2122 towards the middle of the long groove sections 2121. That is, one end of the long groove section 2121 opens towards the middle, and at the same time, the other end of the long groove section 2121 also opens towards the middle. This improves the opening rate of the pressure relief groove 212 and achieves rapid pressure relief.

In some embodiments, the long groove section 2121 is a straight-line groove extending along a straight-line trajectory, and the short groove section 2122 is an arc-shaped groove extending along an arc trajectory.

The two short groove sections 2122 can bend in the same direction or in opposite directions. The two short groove sections 2122 can be curved in directions close to each other such that circle center of each short groove section 2122 is located on the outside of the pressure relief groove 212. Further, the two short groove sections 2122 can be curved in directions away from each other such that circle center of each short groove section 2122 is located on the inside of the pressure relief groove 212.

Exemplarily, in FIG. 10, the two short groove sections 2122 are curved in a direction away from each other, the long groove section 2121 is a straight-line groove extending in the second direction of the cap body 211, and the long groove section 2121 is tangent to the short groove section 2122.

By arranging the short groove section 2122 as an arc-shaped groove extending along an arc trajectory, a weak position is formed at the middle position of the short groove section 2122 on the cap body 211. The weak position is the first opening position of the pressure relief groove 212, which enables the pressure relief groove 212 to open promptly when the internal pressure of the battery cell 20 reaches the detonation pressure. The long groove section 2121 is a straight-line groove extending along a straight-line trajectory. After the cap body 211 cracks along the short groove section 2122, it can more easily open along the long groove section 2121, thus improving the opening rate of the pressure relief groove 212 and achieving rapid pressure relief.

In some embodiments, the extension direction of the long groove section 2121 is consistent with a width direction of the cap body 211.

"The extension direction of the long groove section 2121 is consistent with a width direction of the cap body 211" can also be understood as the extension direction of the short groove section 2122 is consistent with the length direction of the cap body 211.

By aligning the extension direction of the long groove section 2121 with the width direction of the cap body 211, when the inner side of the end cap 21 is subjected to the internal pressure of the battery cell 20, the stress at the position of the short groove section 2122 on the end cap 21 is more concentrated. When the outer side of the end cap 21 is subjected to impact force, the stress at the position of the long groove section 2121 on the end cap 21 is more concentrated, which enables a greater difference in stress concentration regions of the end cap 21 under the two different working conditions. This enhances the impact resistance of the battery cell 20 and improves the service life of the battery cell 20.

The embodiments of the present invention further provide a battery cell 20, wherein the battery cell 20 comprises an electrode assembly 22, a shell 23, and the end cap 21 as described above. The shell 23 is provided with a holding space with an opening at one end, and the holding space is configured to house the electrode assembly 22. The end cap 21 is connected to the shell 23 and seals the opening.

The embodiments of the present invention provide a battery 100, wherein the battery 100 comprises a box 10 and the battery cell 20 as described above. The battery cell 20 is contained within the box 10.

In some embodiments, the end cap 21 is provided on a side of the battery cell 20 close to a bottom wall of the box 10.

The bottom wall of the box 10 is the wall face of the box 10 opposite the open end of the box 10.

Providing the end cap 21 on a side of the battery cell 20 close to a bottom wall of the box 10 means that the battery cell 20 is arranged upside down inside the box 10.

The embodiments of the present invention further provide an electric device, wherein the electric device includes the battery 100 as described above. The battery 100 is configured to provide electrical energy.

According to some embodiments of the present invention, with reference to FIG. 4 to FIG. 6,

The embodiments of the present invention provide an end cap 21, wherein the end cap 21 comprises a cap body 211 and a pressure relief groove 212 and the pressure relief groove 212 is provided in the cap body 211. The pressure relief groove 212 comprises a long groove section 2121 and a short groove section 2122 located in different orientations, wherein the long groove section 2121 is connected to the short groove section 2122. The extension direction of the long groove section 2121 is consistent with a width direction of the cap body 211. The long groove section 2121 is provided with a thickening zone 2123, and a thickness of the cap body 211 in the thickening zone 2123 is greater than a thickness of the cap body 211 in the short groove section 2122. Along an extension direction of the long groove section 2121, a ratio of the length of the thickening zone 2123 to the length of the long groove section 2121 is 0.01-0.5.

When an inner side of the end cap 21 is subjected to pressure from the inside of the battery cell 20, the short groove section 2122 is a stress concentration region. When an outside of the end cap 21 is subjected to an impact force, the long groove section 2121 is the stress concentration region. Therefore, the long groove section 2121 is more susceptible to breakage from external impacts than the short groove section 2122. The end cap 21, by providing a thickening zone 2123 on the long groove section 2121, makes the thickness of the cap body 211 at the thickening zone 2123 greater than the thickness of the cap body 211 at the short groove section 2122, thus enhancing the strength of the long groove section 2121 and improving the impact resistance of the end cap 21. To a certain extent, the long groove section 2121 is prevented from being damaged due to external impacts, and the pressure relief groove 212 is prevented from opening when the internal pressure of the battery cell 20 does not reach the detonation pressure, thereby ensuring the normal operation of the battery cell 20.

If the ratio of the length of the thickening zone 2123 to the length of the long groove section 2121 is less than 0.01, the length of the thickening zone 2123 is small, where the strengthening effect on the long groove section 2121 is too weak. Thus, the enhancement of the impact resistance of the end cap 21 is not obvious. If the ratio of the length of the thickening zone 2123 to the length of the long groove section 2121 is more than 0.5, the length of the thickening zone 2123 is larger, where the strengthening effect on the long groove section 2121 is too strong. Thus, the long groove section 2121 is not easy to open when the internal pressure of the battery cell 20 reaches the detonation pressure, which weakens the speed of pressure relief.

The above are only preferred embodiments of the present invention, which are not intended to limit the present invention.

## Claims

1. An end cap (21), comprising:
a cap body (211); and
a pressure relief groove (212), arranged on the cap body (211), wherein the pressure relief groove (212) comprises a long groove section (2121) and a short groove section (2122) located in different orientations, and the long groove section (2121) is connected to the short groove section (2122),
wherein the long groove section (2121) is provided with a thickening zone (2123), and a thickness of the cap body (211) in the thickening zone (2123) is greater than a thickness of the cap body (211) in the short groove section (2122),
**characterized in that**
the thickness of the cap body (211) in the thickening zone (2123) is not less than 1 mm.

2. The end cap (21) according to claim 1, wherein along an extension direction of the long groove section (2121), a ratio of a length of the thickening zone (2123) to a length of the long groove section (2121) is 0.01-0.5.

3. The end cap (21) according to claim 1 or 2, wherein the long groove section (2121) is provided with multiple thickening zones (2123), and the multiple thickening zones (2123) are arranged at intervals along an extension direction of the long groove section (2121).

4. The end cap (21) according to claim 1 or 2, wherein the thickening zone (2123) is located in a middle portion of the long groove section (2121).

5. The end cap (21) according to any one of claims 1 to 4, wherein the long groove section (2121) is a straight-line groove extending along a straight-line trajectory.

6. The end cap (21) according to any one of claims 1 to 4, wherein the pressure relief groove (212) comprises two long groove sections (2121), the two long groove sections (2121) are arranged opposite to each other along a first direction, and the short groove section (2122) is connected to the two long groove sections (2121).

7. The end cap (21) according to claim 6, wherein the thickening zone (2123) located on one long groove section (2121) and the thickening zone (2123) located on the other long groove section (2121) are arranged in an axially symmetrical manner.

8. The end cap (21) according to claim 6, wherein the long groove section (2121) comprises a first end and a second end, wherein the first end of each long groove section (2121) is connected to the short groove section (2122); a connection line connecting the first end of one long groove section (2121) to the second end of the other long groove section (2121) is a first connection line (2124), and a connection line connecting the second end of one long groove section (2121) to the first end of the other long groove section (2121) is a second connection line (2125); an intersection point of the first connection line (2124) and the second connection line (2125) is a center point (2126); and the thickening zone (2123) located on one long groove section (2121) and the thickening zone (2123) located on the other long groove section (2121) are arranged with central symmetry around the center point (2126).

9. The end cap (21) according to any one of claims 6 to 8, wherein the pressure relief groove (212) comprises two short groove sections (2122), wherein the two short groove sections (2122) are arranged oppositely along a second direction; each short groove section (2122) connects two long groove sections (2121); and the first direction, the second direction, and a thickness direction of the cap body (211) are perpendicular to each other.

10. The end cap (21) according to any one of claims 6 to 9, wherein the long groove section (2121) is a straight-line groove extending along a straight-line trajectory, and the short groove section (2122) is an arc-shaped groove extending along an arc trajectory.

11. The end cap (21) according to any one of claims 1 to 10, wherein an extension direction of the long groove section (2121) is consistent with a width direction of the cap body (211).

12. A battery cell (20), comprising:
an electrode assembly (22);
a shell (23), provided with a holding space with an opening at one end, wherein the holding space is configured to house the electrode assembly (22); and
the end cap (21) according to any one of claims 1 to 11, wherein the end cap (21) is connected to the shell (23) and configured to seal the opening.

13. A battery (100), comprising:
a box (10); and
the battery cell (20) according to claim 12, wherein the battery cell (20) is housed in the box (10).

14. The battery (100) according to claim 13, wherein the end cap (21) is provided on a side of the battery cell (20) close to a bottom wall of the box (10).

15. An electrical device, comprising the battery (100) according to claim 13 or 14, wherein the battery (100) is configured to provide electrical energy.

## Patentansprüche

1. Endkappe (21), umfassend:
einen Kappenkörper (211); und
eine Druckentlastungsnut (212), die am Kappenkörper (211) angeordnet ist, wobei die Druckentlastungsnut (212) einen langen Nutabschnitt (2121) und einen kurzen Nutabschnitt (2122) umfasst, die sich in unterschiedlichen Ausrichtungen befinden, und
der lange Nutabschnitt (2121) mit dem kurzen Nutabschnitt (2122) verbunden ist,
wobei der lange Nutabschnitt (2121) mit einer Verdickungszone (2123) versehen ist und
eine Dicke des Kappenkörpers (211) in der Verdickungszone (2123) größer ist als eine Dicke des Kappenkörpers (211) in dem kurzen Nutabschnitt (2122),
**dadurch gekennzeichnet, dass** die Dicke des Kappenkörpers (211) in der Verdickungszone (2123) nicht weniger als 1 mm ist.

2. Endkappe (21) nach Anspruch 1, wobei entlang einer Erstreckungsrichtung des langen Nutabschnitts (2121) ein Verhältnis einer Länge der Verdickungszone (2123) zu einer Länge des langen Nutabschnitts (2121) 0,01-0,5 beträgt.

3. Endkappe (21) nach Anspruch 1 oder 2, wobei der lange Nutabschnitt (2121) mit mehreren Verdickungszonen (2123) versehen ist und die mehrere Verdickungszonen (2123) in Abständen entlang einer Erstreckungsrichtung des langen Nutabschnitts (2121) angeordnet sind.

4. Endkappe (21) nach Anspruch 1 oder 2, wobei sich die Verdickungszone (2123) in einem mittleren Abschnitt des langen Nutabschnitts (2121) befindet.

5. Endkappe (21) nach einem der Ansprüche 1 bis 4, wobei der lange Nutabschnitt (2121) eine geradlinige Nut ist, die sich entlang einer geradlinigen Bahn erstreckt.

6. Endkappe (21) nach einem der Ansprüche 1 bis 4, wobei die Druckentlastungsnut (212) zwei lange Nutabschnitte (2121) umfasst, die beiden langen Nutabschnitte (2121) entlang einer ersten Richtung einander gegenüberliegend angeordnet sind und der kurze Nutabschnitt (2122) mit den beiden langen Nutabschnitten (2121) verbunden ist.

7. Endkappe (21) nach Anspruch 6, wobei die an einem langen Nutabschnitt (2121) befindliche Verdickungszone (2123) und die an dem anderen langen Nutabschnitt (2121) befindliche Verdickungszone (2123) achsensymmetrisch angeordnet sind.

8. Endkappe (21) nach Anspruch 6, wobei der lange Nutabschnitt (2121) ein erstes Ende und ein zweites Ende umfasst, wobei das erste Ende jedes langen Nutabschnitts (2121) mit dem kurzen Nutabschnitt (2122) verbunden ist; eine Verbindungslinie, die das erste Ende eines langen Nutabschnitts (2121) mit dem zweiten Ende des anderen langen Nutabschnitts (2121) verbindet, eine erste Verbindungslinie (2124) ist, und eine Verbindungslinie, die das zweite Ende eines langen Nutabschnitts (2121) mit dem ersten Ende des anderen langen Nutabschnitts (2121) verbindet, eine zweite Verbindungslinie (2125) ist; ein Schnittpunkt der ersten Verbindungslinie (2124) und der zweiten Verbindungslinie (2125) ein Mittelpunkt (2126) ist; und die an einem langen Nutabschnitt (2121) befindliche Verdickungszone (2123) und die an dem anderen langen Nutabschnitt (2121) befindliche Verdickungszone (2123) zentralsymmetrisch um den Mittelpunkt (2126) angeordnet sind.

9. Endkappe (21) nach einem der Ansprüche 6 bis 8, wobei die Druckentlastungsnut (212) zwei kurze Nutabschnitte (2122) umfasst, wobei die beiden kurzen Nutabschnitte (2122) entlang einer zweiten Richtung einander gegenüberliegend angeordnet sind; jeder kurze Nutabschnitt (2122) zwei lange Nutabschnitte (2121) verbindet; und die erste Richtung, die zweite Richtung und eine Dickenrichtung des Kappenkörpers (211) senkrecht zueinander stehen.

10. Endkappe (21) nach einem der Ansprüche 6 bis 9, wobei der lange Nutabschnitt (2121) eine geradlinige Nut ist, die sich entlang einer geradlinigen Bahn erstreckt, und der kurze Nutabschnitt (2122) eine bogenförmige Nut ist, die sich entlang einer Bogenbahn erstreckt.

11. Endkappe (21) nach einem der Ansprüche 1 bis 10, wobei eine Erstreckungsrichtung des langen Nutabschnitts (2121) mit einer Breitenrichtung des Kappenkörpers (211) übereinstimmt.

12. Batteriezelle (20), umfassend:
eine Elektrodenanordnung (22);
eine Hülle (23), die mit einem Aufnahmeraum mit einer Öffnung an einem Ende versehen ist, wobei der Aufnahmeraum konfiguriert ist, um die Elektrodenanordnung (22) aufzunehmen; und
die Endkappe (21) nach einem der Ansprüche 1 bis 11, wobei die Endkappe (21) mit der Hülle (23) verbunden und konfiguriert ist, um die Öffnung abzudichten.

13. Batterie (100), umfassend:
einen Kasten (10); und
die Batteriezelle (20) nach Anspruch 12, wobei die Batteriezelle (20) in dem Kasten (10) aufgenommen ist.

14. Batterie (100) nach Anspruch 13, wobei die Endkappe (21) an einer Seite der Batteriezelle (20) nahe einer Bodenwand des Kastens (10) bereitgestellt ist.

15. Elektrische Vorrichtung, umfassend die Batterie (100) nach Anspruch 13 oder 14, wobei die Batterie (100) konfiguriert ist, um elektrische Energie bereitzustellen.

## Revendications

1. Capuchon d'extrémité (21), comprenant :
un corps de capuchon (211) ; et
une rainure de libération de pression (212), agencée sur le corps de capuchon (211), la rainure de libération de pression (212) comprenant une section de rainure longue (2121) et une section de rainure courte (2122) situées selon des orientations différentes, et la section de rainure longue (2121) est raccordée à la section de rainure courte (2122),
la section de rainure longue (2121) étant pourvue d'une zone d'épaississement (2123), et une épaisseur du corps de capuchon (211) dans la zone d'épaississement (2123) étant supérieure à une épaisseur du corps de capuchon (211) dans la section de rainure courte (2122),
**caractérisé en ce que** l'épaisseur du corps de capuchon (211) dans la zone d'épaississement (2123) n'est pas inférieure à 1 mm.

2. Capuchon d'extrémité (21) selon la revendication 1, dans lequel le long d'une direction d'extension de la section de rainure longue (2121), un rapport d'une longueur de la zone d'épaississement (2123) à une longueur de la section de rainure longue (2121) est de 0,01 à 0,5.

3. Capuchon d'extrémité (21) selon la revendication 1 ou 2, dans lequel la section de rainure longue (2121) est pourvue de plusieurs zones d'épaississement (2123), et les plusieurs zones d'épaississement (2123) sont agencées à des intervalles le long d'une direction d'extension de la section de rainure longue (2121).

4. Capuchon d'extrémité (21) selon la revendication 1 ou 2, dans lequel la zone d'épaississement (2123) est située dans une partie centrale de la section de rainure longue (2121).

5. Capuchon d'extrémité (21) selon l'une quelconque des revendications 1 à 4, dans lequel la section de rainure longue (2121) est une rainure rectiligne s'étendant le long d'une trajectoire rectiligne.

6. Capuchon d'extrémité (21) selon l'une quelconque des revendications 1 à 4, dans lequel la rainure de libération de pression (212) comprend deux sections de rainure longue (2121), les deux sections de rainure longue (2121) sont agencées en regard l'une de l'autre le long d'une première direction, et la section de rainure courte (2122) est raccordée aux deux sections de rainure longue (2121).

7. Capuchon d'extrémité (21) selon la revendication 6, dans lequel la zone d'épaississement (2123) située sur une section de rainure longue (2121) et la zone d'épaississement (2123) située sur l'autre section de rainure longue (2121) sont agencées de manière à respecter une symétrie axiale.

8. Capuchon d'extrémité (21) selon la revendication 6, dans lequel la section de rainure longue (2121) comprend une première extrémité et une deuxième extrémité, la première extrémité de chaque section de rainure longue (2121) est raccordée à la section de rainure courte (2122) ; une ligne de raccordement raccordant la première extrémité d'une section de rainure longue (2121) à la deuxième extrémité de l'autre section de rainure longue (2121) est une première ligne de raccordement (2124), et une ligne de raccordement raccordant la deuxième extrémité d'une section de rainure longue (2121) à la première extrémité de l'autre section de rainure longue (2121) est une deuxième ligne de raccordement (2125) ; un point d'intersection de la première ligne de raccordement (2124) et la deuxième ligne de raccordement (2125) est un point central (2126) ; et la zone d'épaississement (2123) située sur une section de rainure longue (2121) et la zone d'épaississement (2123) située sur l'autre section de rainure longue (2121) sont agencées selon une symétrie centrale autour du point central (2126).

9. Capuchon d'extrémité (21) selon l'une quelconque des revendications 6 à 8, dans lequel la rainure de libération de pression (212) comprend deux sections de rainure courte (2122), les deux sections de rainure courte (2122) sont agencées en regard le long d'une deuxième direction ; chaque section de rainure courte (2122) raccorde deux sections de rainure longue (2121) ; et la première direction, la deuxième direction, et une direction d'épaisseur du capuchon d'extrémité (211) sont perpendiculaires les unes aux autres.

10. Capuchon d'extrémité (21) selon l'une quelconque des revendications 6 à 9, dans lequel la section de rainure longue (2121) est une rainure rectiligne s'étendant le long d'une trajectoire rectiligne, et la section de rainure courte (2122) est une rainure en arc s'étendant le long d'une trajectoire en arc.

11. Capuchon d'extrémité (21) selon l'une quelconque des revendications 1 à 10, dans lequel une direction d'extension de la section de rainure longue (2121) est cohérente avec une direction de largeur du capuchon d'extrémité (211).

12. Cellule de batterie (20), comprenant :
un ensemble électrode (22) ;
une enveloppe (23), pourvue d'un espace de réception comprenant une ouverture au niveau d'une extrémité, l'espace de réception étant conçu pour recevoir l'ensemble électrode (22) ; et
le capuchon d'extrémité (21) selon l'une quelconque des revendications 1 à 11, le capuchon d'extrémité (21) étant raccordé à l'enveloppe (23) et conçu pour fermer l'ouverture.

13. Batterie (100), comprenant :
une boîte (10) ; et
la cellule de batterie (20) selon la revendication 12, la cellule de batterie (20) étant reçue dans la boîte (10).

14. Batterie (100) selon la revendication 13, dans laquelle le capuchon d'extrémité (21) est fourni sur un côté de la cellule de batterie (20) proche d'une paroi de fond de la boîte (10).

15. Dispositif électrique, comprenant la batterie (100) selon la revendication 13 ou 14, la batterie (100) étant conçue pour fournir de l'énergie électrique.
